# EUROPÄISCHE PATENTSCHRIFT

(11) **EP 3 741 240 B1**
(45) Veröffentlichungstag und Bekanntmachung des Hinweises auf die Patenterteilung: **23.03.2022**
(21) Anmeldenummer: 20167090.8
(22) Anmeldetag: 31.03.2020
(51) Int. Cl.: A41D 13/11, A41D 19/00, B01D 39/16, B32B 5/06

(54) **GESICHTSMASKE MIT FILTERMEDIUM AUS POLYPROPYLENFILAMENTEN UND VERWENDUNG EINER GESCHICHTMASKE**
FACE MASK WITH FILTER MEDIUM MADE FROM POLYPROPYLENE FILAMENTS AND USE OF A FACE MASK
MASQUE FACIAL POURVU DE MOYEN FILTRANT EN FILAMENTS DE POLYPROPYLÈNE ET UTILISATION D'UN MASQUE FACIAL

(43) Veröffentlichungstag der Anmeldung: 25.11.2020
(73) Patentinhaber: Carl Freudenberg KG, 69469 Weinheim (DE)
(72) Erfinder: STAUDENMAYER, Oliver, 69469 Weinheim (DE); GÖBEL. Jan Thomas, 68552 Hedesheim (DE); HERMANN, Jochen, 66879 Reichenbach-Steegen (DE); GORGES, Thorsten, 97688 Rodenbach (DE); BAMSTEINER, Alexander, 66879 Kollweiler (DE); LANDER, Michael, 66903 Altenkirchen (DE); RUTSCH, Peter, 69518 Abtsteinach (DE)
(74) Vertreter: Banse & Steglich Patentanwälte PartmbB

(56) Entgegenhaltungen:
- EP-A2- 0 060 687
- EP-A2- 0 137 094
- WO-A1-96/00093
- WO-A1-2010/049052
- WO-A2-97/23246
- JP-A- 2008 093 502
- US-A- 5 486 411

## Beschreibung

Die Erfindung betrifft eine Gesichtsmaske mit einem Filtermedium aus Polyproylenfilamenten, sowie deren Verwendungen.

### Stand der Technik

Für den Atemschutz werden verschiedene Typen von Gesichtsmasken verwendet. Filtrierende Halbmasken (FFP) sind Gegenstände der persönlichen Schutzausrüstung (PSA) und haben die Zweckbestimmung, den Träger der Maske vor Partikeln und Aerosolen zu schützen. Das Design der filtrierenden Halbmasken ist unterschiedlich. Es gibt Masken ohne Ausatemventil und Masken mit Ausatemventil. Masken ohne Ventil filtern sowohl die eingeatmete Luft als auch die Ausatemluft und bieten daher sowohl einen Eigenschutz als auch einen Fremdschutz. Masken mit Ventil filtern nur die eingeatmete Luft und sind daher für den Fremdschutz nicht ausgelegt. Für filtrierende Halbmasken ist die DIN EN 149:2001-10 relevant.

Medizinische Gesichtsmasken (weitere Bezeichnungen: Mund-Nasen-Schutz, kurz MNS, Mundschutz, OP-Masken, Chirurgische Masken, Surgical Masks), dienen vor allem dem Fremdschutz und schützen den Gegenüber vor der Exposition möglicherweise infektiöser Aerosole desjenigen, der den Mundschutz trägt. Zwar schützen sie bei festem Sitz auch den Träger der Maske, dies ist jedoch nicht die primäre Indikation des Mundschutzes. Für medizinische Halbmasken ist DIN EN 14683:2019-6 relevant. Medizinische Gesichtsmasken werden nicht nur in der Medizin eingesetzt, sondern auch im Alltag verwendet. Medizinische Gesichtsmasken können von Patienten und anderen Personen zur Verminderung des Risikos einer Verbreitung von Infektionen getragen werden, insbesondere in epidemischen oder pandemischen Situationen. Von hoher Bedeutung für medizinisches Personal und die Öffentlichkeit sind medizinische Gesichtsmasken bei der Covid-19 Erkrankung, die durch das Coronavirus SARS-CoV-2 verursacht wird.

Im Stand der Technik weisen medizinische Gesichtsmasken üblicherweise eine dreilagige Struktur auf, die aus einem 15-35 g/m² Polypropylen-Spinnvliesstoff als Trägerlage, einer 20-40 g² elektrostatisch geladenen mittleren Filterlage aus Meltblown-Mikrofasern und einer Abdecklage aus 15-35 g/m² Polypropylen-Spinnvliesstoff besteht. Dabei dient nur die mittlere Filterlage, die durch sehr feine Meltblown-Mikrofasern charakterisiert ist, zur Abtrennung der Aerosole. Die Trägerlage ist zum Mund gerichtet und erfüllt nur eine mechanische Schutzfunktion. Die äußere Abdecklage schützt ebenfalls die Filterlage. Die Filtrationseffizienz der Filterlage bestimmt die Leistungsklasse und den Druckverlust/Atemwiederstand der Maske. Die DIN EN 14683:2019-6 beschreibt die unterschiedliche Leistungsklassen wie folgt:

| Leistungsanforderungen für medizinische Gesichtsmasken Prüfung : | Typ I | Typ II | Typ IIR |
|---|---|---|---|
| Bakterielle Filterleistung (BFE) (%) | ≥ 95 | ≥ 98 | ≥ 98 |
| Druckdifferenz (Pa/cm2) | < 40 | < 40 | < 60 |
| Druck des Spritzwiderstandes (kPA) | entfällt | entfällt | ≥ 16,0 |
| Mikrobiologische Reinheit (KBE/g) | ≤ 30 | ≤ 30 | ≤ 30 |

Die Norm sieht dazu vor, dass medizinische Gesichtsmasken des Typs I ausschließlich bei Patienten und anderen Personen zur Verminderung des Risikos einer Infektionsverbreitung, insbesondere in epidemischen oder pandemischen Situationen, verwendet werden sollten. Masken des Typs I sind nicht für medizinisches Fachpersonal in Operationsräumen oder in anderen medizinischen Einrichtungen mit ähnlichen Anforderungen gedacht.

Jedoch können auch Gesichtsmasken, welche nicht die hohen Anforderungen der DIN EN 14683:2019-6 erfüllen, geeignet sein, um die Verbreitung von Infektionen in der Öffentlichkeit zu verhindern. So kann die Verbreitung von Viren wohl bereits reduziert werden, wenn Personen im täglichen Leben eine Gesichtsmaske mit einer geringeren BFE tragen, beispielsweise von >70%.

Neben der BFE wird zu einer ersten Charakterisierung der Leistungsfähigkeit des Filtermaterials/Maske auch die Abscheidung von NaCl Aerosolen mittels eines Automatischen Filtertesters (Nr. 8130, TSI GmbH, DE) verwendet. Hier wird die Filtrationseffizienz gegenüber NaCl Partikel bei einem Volumenstrom von 32 L/min bestimmt. Diese Art von Atemschutzmasken für die Typen 1a, 2, 2R bewegen sich üblicherweise in einem Luftdurchlässigkeitsbereich von 150 l/m²s gemessen nach EN ISO 9237 bei 100 Pa.

Gesichtsmasken mit Filtermedien auf Basis von Meltblown-Fasern werden in EP 0 137 094 A2 offenbart. Die WO96/00093A1 und US5,486,411 offenbaren Verfahren zur Sterilisierung von Filtermedien.

Die JP2008093502A betrifft ein Verfahren zum Regenerieren von elektrisch geladenen Filtermedien, bei dem das Filtermedium mit einem anderen geladenen Material gerieben wird.

Die WO97/23246A2 betrifft einen Atemmaskenstoff, der eine erste Mikrofaserschicht aus Fasern mit einem Durchmesser zwischen 10 und 25 Mikrometer und eine zweite Mikrofaserschicht aus Fasern mit einem Durchmesser von weniger als 10 Mikrometer aufweist.

Es besteht ein fortlaufender Bedarf nach verbesserten Gesichtsmasken, die vorteilhafte Filtrationseigenschaften und einen hohen Trägerkomfort aufweisen, und die dabei auch gut verfügbar sind.

### Aufgabe der Erfindung

Der Erfindung liegt die Aufgabe zugrunde, Gesichtsmasken bereitzustellen, welche die Nachteile der bekannten Produkte überwinden. Insbesondere sollen Gesichtsmasken bereitgestellt werden, die auf einfache Weise, schnell und in großer Stückzahl verfügbar sind. Ungeachtet dessen sollen die Gesichtsmasken eine hohe Filtereffizienz aufweisen und gleichzeitig einen hohen Trägerkomfort ermöglichen, wobei insbesondere der Atemwiderstand gering sein soll.

### Offenbarung der Erfindung

Überraschenderweise wird die der Erfindung zugrunde liegende Aufgabe gelöst durch Gesichtsmasken und Verwendungen gemäß den Patentansprüchen. Gegenstand der Erfindung ist eine Gesichtsmaske mit einem Filtermedium, das aus Spinnvliesstoff aus Polypropylenfilamenten besteht, die einen Fasertiter von mindestens 1,3 dtex aufweisen, wobei der Spinnvliesstoff elektrostatisch geladen ist, wobei der elektrostatisch geladene Spinnvliesstoff ein Flächengewicht von 70 bis 400 g/m² aufweist, wobei der Spinnvliesstoff aus 2 oder mehr Lagen besteht, wobei optional mindestens eine zusätzliche Lage vorhanden ist, die kein Filtermedium ist.

Mit dem Begriff Gesichtsmaske wird eine Maske bezeichnet, die den Mund, die Nase und gegebenenfalls weitere Teile des Gesichts abdeckt und dadurch schützt. Die Gesichtsmaske umfasst ein Filtermedium. Beim Atmen passiert die Atemluft das Filtermedium, wobei unerwünschte Komponenten der Atemluft, und insbesondere potentiell infektiöse Komponenten, wie Tröpfchen und Partikel, abgetrennt werden.

Die Gesichtsmaske weist ein Filtermedium auf Basis von elektrostatisch geladenem Polypropylen-Spinnvliesstoff auf. Die Gesichtsmaske weist dabei nur dieses eine Filtermedium auf. Somit ist kein weiteres Filtermedium vorhanden, das kein elektrostatisch geladener Polypropylen-Spinnvliesstoff ist. Es kann lediglich optional noch mindestens eine weitere Lage vorhanden sein, die kein Filtermedium ist oder aufweist, die aber von der Atemluft passiert wird, wie eine Verstärkungs- oder Abdecklage. Somit werden alle Lagen von der Atemluft passiert. Die Gesichtsmaske zeichnet sich somit dadurch aus, dass das Filtermedium aus einem einzigen Vliesstofftyp besteht, und daher sehr einfach aufgebaut und herstellbar ist.

Gemäß der vorliegenden Erfindung wurde überraschenderweise gefunden, dass eine Gesichtsmaske mit sehr guter Filterwirkung und Atmungsaktivität bereitgestellt werden kann, wenn ein Filtermedium verwendet wird, dessen Fasern nur aus elektrisch aufgeladenem Polypropylen-Spinnvliesstoff bestehen. Eine Filterlage mit Meltblownfasern ist nicht erforderlich, was die Herstellung vereinfacht und die Kosten deutlich senkt. Außerdem sind sogar weitere Verstärkungs- oder Abdecklagen nicht erforderlich. Im Falle eines mehrlagigen Aufbaus können die äußeren Lagen aus Polypropylen-Spinnvlies gleichzeitig als Abdecklagen fungieren, so dass keinen weiteren Träger- und Abdecklagen notwendig sind, was die Maskenherstellung vereinfacht. Die Spinnvliesstofftechnologie ist zudem eine kostengünstige Technologie und in diesem Punkt der Meltblowntechnologie überlegen. Überraschenderweise hat sich zudem gezeigt, dass das Filtermedium bei gleicher Filtrationseffizienz einen deutlich reduzierten Druckverlust und damit einen geringeren Atemwiderstand aufweist. Dadurch erhöht sich der Komfort der Maske deutlich, zum Beispiel beim Sport, einem Betrieb Produktionsbetrieb, der Gastronomie, im Lebensmittelbereich oder bei großen Menschenansammlungen, ohne signifikante Einbußen bei der Leistungsfähigkeit. Die Gesichtsmaske eignet sich daher auch in hohem Maße für Personen, die nicht medizinisches Fachpersonal sind.

Die Maske weist Mittel auf, mit denen sie über Mund und Kinn des Trägers angelegt werden kann und die sicherstellen, dass die Maske an den Seiten eng anliegt, wie Bänder und Klammern. Gesichtsmasken können unterschiedliche Formen und konstruktive Gestaltungen haben, sowie gegebenenfalls zusätzliche Merkmale wie einen Gesichtsschutz (um den Träger vor Spritzern und Tröpfchen zu schützen) mit oder ohne Anti-Beschlag-Funktion oder eine Nasenklammer (um durch deren Anpassung an die Nasenform den Sitz zu verbessern) aufweisen. Das Filtermedium kann in einem Rahmen oder auf sonstige Weise fixiert sein.

Das Filtermedium ist ein Spinnvliesstoff aus Polypropylenfilamenten, der in Form einer einzigen Lage oder mehrerer übereinanderliegender Lagen vorliegen kann. Spinnvliesstoffe sind Vliesstoffe aus Fasern, die aus durch Düsen hindurchtretende Polymerschmelzen gesponnen und verstreckt werden, danach unmittelbar zu einem Vlies abgelegt und verfestigt werden. Dabei entstehen kontinuierliche Filamente, die auch als "Endlosfilamente" bezeichnet werden. Spinnvliese unterscheiden sich dabei strukturell deutlich von Vliesstoffen aus Stapelfasern, die gelegt werden. Sie sind vorteilhaft, weil sie stabiler sein können, wenig unerwünschten Partikelverlust zeigen und einen höheren Komfort auf der Haut aufweisen können.

Das Faserrohmaterial der Filamente des erfindungsgemäßen Filtermediums ist Polypropylen. Es wurde überraschenderweise gefunden, dass als Spinnvlies abgelegte elektrisch geladene Filamente aus Polypropylen ausreichen, um die Vorteile hinsichtlich Effizienz und Druckabfall zu erzielen. Dies ist auch von Vorteil, weil Polypropylen gut zu Filamenten verspinnbar ist und leicht verfügbar ist. Das Polypropylen als Faserrohmaterial kann gegebenenfalls in den Fasern Additive enthalten, die nicht polymer sind, wie Verarbeitungshilfen, Stabilisatoren, Mittel zur Stabilisierung der Elektretfunktion oder biologisch aktive Substanzen. Die Filamente können gegebenenfalls beschichtet sein, beispielsweise mit antimikrobiellen Substanzen.

Die Filamente können Mono- oder Mehrkomponentenfilamente sein. Monokomponentenfilament bestehen nur aus einem Polymer während in Bikomponentenfilamenten, insbesondere vom Kern/Mantel Typ, das Polypropylen der Mantelkomponente einen geringeren Schmelzpunkt aufweist als das Polypropylen der Kernkomponente. Solche Bikomponentenfilamente können durch Anschmelzen der Mantelkomponente gut thermisch verfestigt werden. Es ist besonders bevorzugt, dass der Spinnvliesstoff aus PP/PP Kern-Mantel Bikomponentenfilamenten besteht, die thermisch verfestigt sind. Es wurde gefunden, dass ein Filtermedium mit einem solchen Spinnvliesstoff besonders vorteilhafte Eigenschaften aufweist, und dabei insbesondere eine besonders hohe Luftdurchlässigkeit.

Die Filamente werden zum Spinnvliesstoff insbesondere thermisch verfestigt. Die thermische Verfestigung kann durch Kalandrieren, wie Punktkalandrieren, insbesondere für Monofilamente, oder durch thermische Behandlung im Ofen erfolgen, insbesondere für Mehrkomponentenfilamente. Bei diesen Verfahren ist von Vorteil, dass das Filtermedium nicht oder nur anteilig verpresst wird, so dass eine ausreichende Luftdurchlässigkeit verbleibt. Der Spinnvliesstoff kann auch oder alternativ mechanisch verfestigt sein, beispielsweise durch Vernadeln oder Wasserstrahlbehandlung. Bevorzugt ist der Spinnvliesstoff nicht mit einem zusätzlichen Bindemittel verfestigt. Dies ist relativ aufwändig und es besteht die Gefahr, dass sich mit der Zeit oder bei Belastungen Teilchen des Bindemittels ablösen und in die Atemluft gelangen.

Der elektrostatisch geladene Spinnvliesstoff in der Maske weist ein Flächengewicht von 70 bis 400 g/m², bevorzugt von 100 bis 250 g/m², auf. Erfindungsgemäß wurde gefunden, dass solche relative niedrigen Flächengewichte ausreichen können, damit die hohen Anforderungen an medizinische Gesichtsmasken erfüllt werden, was auch für den Tragekomfort vorteilhaft ist.

Der Spinnvliesstoff in der Maske besteht aus 2 oder mehr Lagen, wie 2 bis 10 Lagen. In einer bevorzugten Ausführungsform besteht der Spinnvliesstoff in der Maske aus 3 oder mehr Lagen, beispielsweise 3 bis 8 Lagen oder 3 bis 5 Lagen. Beispielsweise kann der Spinnvliesstoff aus 3, 4, 5 oder 6 Lagen bestehen. Besonders bevorzugt ist ein Filtermedium aus 3 oder 4 Lagen. Bei diesen Ausführungsformen sind alle Lagen Spinnvliesstoffe aus Polypropylenfilamenten, wobei der Spinnvliesstoff elektrostatisch geladen ist. Die Lagen können in dem Filtermedium lose übereinandergelegt sein oder miteinander verbunden sein. Die Verbindung kann flächig oder in den Randbereichen erfolgen. Es wurde gefunden, dass ein Filtermedium aus mehreren Lagen im Allgemeinen bessere Filtereigenschaften aufweist als ein vergleichbarer Spinnvliesstoff aus einer einzigen Lage, der das gleiche Flächengewicht aufweist und aus den gleichen Filamenten besteht. Ohne an eine Theorie gebunden zu sein ist denkbar, dass Freiräume zwischen Lagen die Filtereigenschaften im Vergleich zu einem einlagigen Vliesstoff verbessern können.

In einer bevorzugten Ausführungsform weist der Vliesstoff zwei oder mehr Lagen auf, und dabei insbesondere 3 bis 6 Lagen, die jeweils ein Flächengewicht von 20 bis 100 g/m², bevorzugt von 30 bis 80 g/m² aufweisen. In einer bevorzugten Ausführungsform weisen die Lagen eine Dicke von jeweils 0,3mm bis 6 mm auf, insbesondere zwischen 0.8 mm und 3 mm, ermittelt gemäß DIN ISO 9073-2:1995, Teil 2, für normale, nicht bauschige Vliesstoffe. Es wurde gefunden, dass durch Kombination von mehreren solchen Lagen ein Filtermedium mit besonders guten Filtereigenschaften erhalten wird.

In einer bevorzugten Ausführungsform weisen die Lagen unterschiedliche Flächengewichte auf. Durch Auswahl der Flächengewichte können die Filtereigenschaften gegebenenfalls noch verbessert werden. So ist es denkbar, dass bei 3 oder mehr Lagen die beiden äußeren Lagen geringere Flächengewichte aufweisen, um im Wesentlichen eine äußere Schutzfunktion zu erfüllen. In einer anderen Ausführungsform sind die Lagen identisch, oder sie weisen zumindest das gleiche Flächengewicht und/oder die gleiche Dicke auf. Dies hat den Vorteil, dass ein effizientes Filtermedium einfach herstellbar ist, weil es weniger Komponenten erfordert.

Die Polypropylenfilamente weisen einen Fasertiter von mindestens 1.3 dtex, bevorzugt 2 bis 7 dtex, insbesondere 2,2 bis 4 dtex auf. Mit solchen Titern lassen sich besonders vorteilhafte Filtermedien hinsichtlich BFE und Luftdurchlässigkeit erzeugen.

In einer bevorzugten Ausführungsform weist der Vliesstoff mindestens 3 Lagen auf, wobei die Lagen unterschiedliche Faserdurchmesser aufweisen können, wobei die Faserdurchmesser in einer inneren Lage kleiner sind als in einer äußeren Lage. Dies hat den Vorteil, dass die äußeren Lagen das Filtermedium verstärken, während die inneren Lagen eine hohe Filterwirkung erreichen.

In einer bevorzugten Ausführungsform ist der Spinnvliesstoff durch Corona-Behandlung elektrostatisch geladen. Eine Koronaentladung wird in der Physik als elektrische Entladung in einem nicht leitenden Medium, beispielsweise in Luft, bezeichnet. Es wurde gefunden, dass eine Corona-Behandlung geeignet ist, das Filtermedium auf relativ einfache Weise mit guten Filtereigenschaften auszustatten.

In einer bevorzugten Ausführungsform weist die Gesichtsmaske eine Bakterielle Filterleistung (Bakterial Filtration Efficiency, BFE) von mindestens 70%, mindestens 75%, oder mindestens 80% oder mindestens 85%; bevorzugt aber mindestens 95%, mindestens 98% oder sogar mindestens 99% auf, gemessen gemäß DIN EN 14683:2019-6. Es wurde gefunden, dass erfindungsgemäßen Filtermedien eine sehr hohe BFE aufweisen können, so dass sie die Leistungsanforderungen für medizinische Gesichtsmasken des Typs I, II oder sogar IIR erfüllen können. Sie eigenen sich daher in hohem Maße für medizinisches Personal. Unabhängig davon können aber auch Gesichtsmasken von praktischer Bedeutung sein, die nicht diese hohen Leistungsanforderungen erfüllen. So kann es zur Verhinderung der Verbreitung von Krankheiten, wie durch das Coronavirus, sinnvoll sein, der Öffentlichkeit Gesichtsmasken zur Verfügung zu stellen, die kostengünstig und in hoher Stückzahl verfügbar sind, jedoch eine BFE kleiner 85% aufweisen. Daher weist die Gesichtsmaske in einer Ausführungsform eine BFE von mindestens 70% und kleiner 84% auf. Die erfindungsgemäßen Gesichtsmasken eigenen sich daher auch für eine breite Ausstattung der Öffentlichkeit zur Verhinderung der Verbreitung von Krankheiten.

Die DIN EN14683:2019-6 gibt für einen Geschichtsmaske des Typs I und II eine Druckdifferenz <40 Pa/cm² vor. Dies entspricht einer Luftdurchlässigkeit von >133 l/m²s nach DIN EN ISO 9237 bei 100 Pa. In einer bevorzugten Ausführungsform weist die Gesichtsmaske eine Luftdurchlässigkeit von größer als 250 l/m²s, bevorzugt von größer 400 l/m²s, besonders bevorzugt von größer 800 l/m²s auf, gemessen gemäß EN ISO 9237:1995 bei 100 Pa. Eine solche Luftdurchlässigkeit ist für Gesichtsmasken sehr hoch. Dies ist vorteilhaft, weil eine hohe Luftdurchlässigkeit bedeutet, dass der Atemwiderstand gering ist. Der Träger wird daher nicht oder nur wenig bei seinen Tätigkeiten beeinträchtigt, wobei selbst die Durchführung von anstrengenden Tätigkeiten möglich ist. In einer weiteren bevorzugten Ausführungsform weist die Gesichtsmaske eine Druckdifferenz von <40 Pa/cm² auf, bevorzugt <20 Pa/cm² oder <10 Pa/cm², insbesondere <5 Pa/cm², gemessen gemäß DIN EN 14683:2019-6.

In einer bevorzugten Ausführungsform weist die Gesichtsmaske eine Effizienz gegenüber NaCl Aerosol bei 32 l/min Volumenstrom von mindestens 70%, bevorzugt mindestens 80% auf, gemessen gemäß mittels eines Automatischen Filtertester (Nr. 8130, TSI GmbH, DE).

In einer bevorzugten Ausführungsform erfüllt die Gesichtsmaske die Leistungsanforderungen an medizinische Gesichtsmasken der DIN EN 14683:2019-6, Typ I, Typ II oder Typ IIR. In einer bevorzugten Ausführungsform erfüllt die Gesichtsmaske die Anforderungen an medizinische Gesichtsmasken der DIN EN 14683:2019-6, Typ I, Typ II oder Typ IIR hinsichtlich bakterieller Filterleistung, Druckdifferenz, Druck des Spritzwiderstandes und/oder mikrobiologische Reinheit.

In einer bevorzugten Ausführungsform weist die Gesichtsmaske folgende Eigenschaften auf:
der Spinnvliesstoff weist 3 bis 6 Lagen auf,
die Gesichtsmaske weist keine zusätzliche Lage auf, und
die Gesichtsmaske weist eine Bakterielle Filterleistung (BFE) von mindestens 70% auf, gemessen gemäß DIN EN 14683:2019-6.

In einer bevorzugten Ausführungsform weist die Gesichtsmaske keine zusätzliche Lage auf. Dies bedeutet, dass das Filtermedium nicht flächig mit einer weiteren Lage verbunden ist, durch welche die Atemluft passiert. Dies ist vorteilhaft, weil so eine einfache Gesichtsmaske aus wenigen Komponenten bereitgestellt werden kann, Es wurde gefunden, dass solche einfachen Gesichtsmasken nicht nur eine hohe Filtereffizienz aufweisen können, sondern auch eine ausreichende mechanische Stabilität. Wenn das Filtermedium dabei aus 3 oder mehr Lagen besteht, können die äußeren Lagen als Verstärkungs- und Abdecklage dienen. Sie können gegebenenfalls aus weniger feinen Filamenten bestehen, weil dadurch die Stabilität erhöht werden kann. Solche einfachen Gesichtsmasken, die als Fasermaterial nur Polypropylen-Spinnvliese aufweisen, und auch keine sonstigen Lagen aufweisen, können schnell, einfach, kostengünstig und in hoher Stückzahl bereitgestellt werden, was im Falle einer Epidemie oder Pandemie von hoher Bedeutung ist.

Die Gesichtsmaske weist keine Lage aus Meltblown Fasern auf. Dies ist vorteilhaft, weil Meltblown Fasern relativ aufwändig herzustellen sind. Die Gesichtsmaske weist auch keine weiteren Filtermedien auf, die nicht aus Fasern bestehen, wie aus Aktivkohle. Die Herstellung eines Filtermediums nur aus Polypropylen Spinnvliesen ist vorteilhaft, weil sie deutlich einfacher und ökonomischer ist und eine schnelle Versorgung mit Gesichtsmasken in großer Stückzahl besser gewährleistet werden kann.

Die Gesichtsmaske dient vor allem dazu, zu verhindern, dass der Träger infektiöse Komponenten ausatmet. Das Filtermedium dient daher zum Filtern der Atemluft. Es ist in der Gesichtsmaske so angeordnet, dass die Atemluft das Filtermedium und, falls vorhanden die mindestens eine weitere Lage, passiert. Bevorzugt werden flüssige Komponenten, wie Flüssigkeitströpfchen und Aerosole, und/oder feste Komponenten aus der Luft, wie Partikel, abgetrennt. Bevorzugt ist die Gesichtsmaske eine Halbmaske, welche Mund und Nase abdeckt, aber die Augen nicht abdeckt.

In einer weiteren Ausführungsform ist mindestens eine zusätzliche Lage vorhanden, die kein Filtermedium ist. Damit ist eine zusätzliche Lage gemeint, die wie das Filtermedium von der Atemluft passiert wird, und die daher flächig mit dem Filtermedium verbunden sein kann (fest oder lose). Die zusätzliche Lage kann beispielsweise eine Verstärkungslage oder Abdeckungslage sein. Eine Verstärkungslage dient dazu, die mechanische Stabilität des Filtermediums zu erhöhen. Eine Abdecklage dient dazu, das Filtermedium von der Umgebung abzuschirmen, beispielsweise nach außen hin vor Beschädigung. Die optionale weitere Lage trägt nicht unmittelbar zur Abtrennung infektiöser Keime durch Filtration bei. Solche zusätzlichen Lagen weisen oft deutlich weniger feine Fasern auf als das Filtermedium. Sie erhöhen auch die Druckdifferenz der Gesichtsmaske nicht signifikant. Die zusätzliche Lage besteht bevorzugt ebenfalls aus Fasern und ist dabei insbesondere ein Vliesstoff. Der Faserdurchmesser einer solchen zusätzlichen Lage könnte beispielsweise größer 0,1 mm oder größer 0,25 mm sein. Beispielsweise kann die mindestens eine zusätzliche Lage die Luftdurchlässigkeit des Filtermediums um weniger als 15%, insbesondere um weniger als 5% erniedrigen. Die zusätzliche Lage ist insbesondere kein Filtermedium für Tröpfchen und/oder infektiöse Keime. Die zusätzliche Lage weist insbesondere eine BFE von <5%, insbesondere <2% oder von etwa 0% auf.

Bevorzugt ist die Gesichtsmaske ein Mund-Nasen-Schutz (kurz Mundschutz; Abkürzung MNS), auch Chirurgische Maske (Surgical mask), Klinikmaske oder OP-Gesichtsmaske. Dies ist ein Hilfsmittel in der Medizin oder für die Verwendung im Alltag, um die Übertragung von Krankheitserregern durch Sekrettröpfchen zu verhindern. Es handelt sich dabei um eine Gesichts-Halbmaske mit dem Filtermedium, das mit Haltemitteln, wie Binde- oder Gummibändern, am Hinterkopf oder hinter den Ohren fixiert wird. Mit einem integrierten flexiblen Metallbügel in der Mitte des oberen Randes kann die Halbmaske an den Nasenrücken gedrückt werden, um das Gesichtsfeld frei zu halten und den Atemluftaustritt nach oben einzuschränken. Nach einmaliger Benutzung kann der MNS entsorgt werden.

In einer bevorzugten Ausführungsform ist die Gesichtsmaske eine medizinische Gesichtsmaske, ein Mund/Nasenschutz, eine Faltmaske, ein Maskenkorb, eine filtrierende Halbmaske oder ein vergleichbarer Schutz von Mund und Nase.

Gegenstand der Erfindung ist auch die Verwendung eines elektrostatisch geladenen Spinnvliesstoffes aus Polypropylenfilamenten, die einen Fasertiter von mindestens 1.3 dtex aufweisen, wobei der elektrostatisch geladene Spinnvliesstoff ein Flächengewicht von 70 bis 400 g/m² aufweist, wobei der Spinnvliesstoff aus 2 oder mehr Lagen besteht, wobei optional mindestens eine zusätzliche Verstärkungslage vorhanden ist, als Filtermedium einer Gesichtsmaske, insbesondere einer medizinischen Gesichtsmaske (surgical mask). Das Filtermedium ist dabei das einzige Filtermedium.

Gegenstand der Erfindung ist auch die Verwendung der Gesichtsmaske zum Filtrieren von Luft und/oder zum Entfernen von infektiösen Keimen aus Luft. Die Verwendung erfolgt bevorzugt von medizinischem Personal und/oder von Personen der Öffentlichkeit, die keine medizinische Tätigkeit ausüben.

Gegenstand der Erfindung ist auch die Verwendung und/oder die Bereitstellung der Gesichtsmaske zum Filtrieren von Luft und/oder zum Entfernen von infektiösen Keimen durch Personen der Öffentlichkeit, die keine medizinische Tätigkeit ausüben, wobei die BFE im Bereich von >70% bis <95% ist. Eine solche Verwendung ist besonders geeignet, um kostengünstig die Verbreitung von Keimen in der Öffentlichkeit zu verhindern, insbesondere bei einer Epidemie oder Pandemie.

### Ausführungsbeispiele

### Beispiel 1

Ein im Ofen thermisch gebundener und kalandrierter Polypropylen Spinnvliesstoff aus Bikomponentenfasern (Kern/Mantel PP/PP, geringerer Schmelzpunkt Mantel) mit einem Flächengewicht von 60 g/m² und einem Faserdurchmesser von 30 µm wird durch Corona-Behandlung elektrostatisch aufgeladen. Ein dreilagiges Filtermedium aus diesem Vliesstoff erzielt eine Filtrationseffizienz bei 32 l/min von 85% gegenüber NaCl Partikeln. Die BFE Effizienz gemäß DIN EN 14683:2019-6 beträgt 95% bei einer Luftdurchlässigkeit von 1050 l/m²s nach DIN EN ISO 9237 bei 100 Pa. Somit entspricht die Filtrationsleistung der Kategorie I, wobei die Luftdurchlässigkeit ungefähr 7 Mal so hoch ist wie der minimale Grenzwert. Der Atemwiderstand ist daher sehr gering und der Anwender hat trotz hohem BFE Schutz einen hohen Tragekomfort.

### Beispiel 2

Ein Spinnvliesstoff aus 50 g/m² Polypropylen Homopolymer (Faserdurchmesser 2,8 dtex) wird mit einem Punktkalander (Verschweißfläche 13%) gebunden und thermisch nachverfestigt und durch Corona-Behandlung elektrostatisch aufgeladen. Ein Filtermedium aus drei dieser Lagen weist eine Filtrationseffizienz bei 32 l/min von 85% gegenüber NaCl Partikeln auf. Die BFE Effizienz gemäß DIN EN 14683:2019-6 beträgt 95% bei einer Luftdurchlässigkeit von 620 l/m²s, d.h die Filtrationsleistung entspricht der Kategorie I, wobei die Luftdurchlässigkeit ungefähr das 4-fache des minimalen Grenzwertes ist Der Atemwiderstand ist daher sehr gering und der Träger hat trotz hohem BFE Schutz einen hohen Tragekomfort.

### Beispiel 3

Ein Spinnvliesstoff aus 50 g/m² Polypropylen Homopolymer (Faserdurchmesser 2,8 dtex) wird mit einem Punktkalander (Verschweißfläche 13%) gebunden und thermisch nachverfestigt und durch Corona-Behandlung elektrostatisch aufgeladen. Ein Filtermedium aus vier dieser Lagen weist eine Filtrationseffizienz bei 32 l/min von 91% gegenüber NaCl Partikeln auf. Die BFE Effizienz gemäß DIN EN 14683:2019-6 beträgt 95% bei einer Luftdurchlässigkeit von 470 l/m²s, d.h die Filtrationsleistung entspricht der Kategorie I, wobei die Luftdurchlässigkeit ungefähr das 3-fache des minimalen Grenzwertes ist Der Atemwiderstand ist daher sehr gering und der Träger hat trotz hohem BFE Schutz einen hohen Tragekomfort.

## Patentansprüche

1. Gesichtsmaske zum Abtrennen infektiöser Keime mit einem Filtermedium, das aus Spinnvliesstoff aus Polypropylenfilamenten besteht, die einen Fasertiter von mindestens 1,3 dtex aufweisen, wobei der Spinnvliesstoff elektrostatisch geladen ist, wobei der elektrostatisch geladene Spinnvliesstoff ein Flächengewicht von 70 bis 400 g/m² aufweist, wobei der Spinnvliesstoff aus 2 oder mehr Lagen besteht, wobei optional mindestens eine zusätzliche Lage vorhanden ist, die kein Filtermedium ist.

2. Gesichtsmaske gemäß Anspruch 1, wobei der Spinnvliesstoff aus 3 bis 6 Lagen besteht.

3. Gesichtsmaske gemäß mindestens einem der vorhergehenden Ansprüche, wobei der elektrostatisch geladene Spinnvliesstoff ein Flächengewicht von 100 bis 250 g/m² aufweist.

4. Gesichtsmaske gemäß mindestens einem der vorhergehenden Ansprüche, wobei die zwei oder mehr Lagen jeweils ein Flächengewicht von 20 bis 100 g/m², bevorzugt von 30 bis 80 g/m² aufweisen.

5. Gesichtsmaske gemäß mindestens einem der vorhergehenden Ansprüche, wobei die Polypropylenfilamente einen Fasertiter von 2 bis 7 dtex aufweisen.

6. Gesichtsmaske gemäß mindestens einem der vorhergehenden Ansprüche, wobei die Lagen unterschiedliche Flächengewichte aufweisen, und/oder
wobei der Vliesstoff mindestens 3 Lagen aufweist, die unterschiedliche Faserdurchmesser aufweisen, wobei die Faserdurchmesser in einer inneren Lage kleiner sind als in einer äußeren Lage.

7. Gesichtsmaske gemäß mindestens einem der vorhergehenden Ansprüche, wobei der Spinnvliesstoff durch Corona-Behandlung elektrostatisch geladen ist.

8. Gesichtsmaske gemäß mindestens einem der vorhergehenden Ansprüche, die eine Bakterielle Filterleistung (BFE) von mindestens 70%, bevorzugt mindestens 95% aufweist, gemessen gemäß DIN EN 14683:2019-6.

9. Gesichtsmaske gemäß mindestens einem der vorhergehenden Ansprüche, die eine Luftdurchlässigkeit von größer 250 l/m²s, bevorzugt von größer 400 l/m²s aufweist, gemessen gemäß EN ISO 9237:1995 bei 100 Pa.

10. Gesichtsmaske gemäß mindestens einem der vorhergehenden Ansprüche, die eine Effizienz gegenüber NaCl Aerosol bei 32 l/min Volumenstrom von mindestens 70% aufweist.

11. Gesichtsmaske gemäß mindestens einem der vorhergehenden Ansprüche, welche die Anforderungen an medizinische Gesichtsmasken der DIN EN 14683:2019-6, Typ I, Typ II oder Typ IIR erfüllt, und/oder
wobei die optionale zusätzliche Lage die Luftdurchlässigkeit des Filtermediums um weniger als 15% erniedrigt.

12. Gesichtsmaske gemäß mindestens einem der vorhergehenden Ansprüche,
wobei der Spinnvliesstoff aus 2 bis 6 Lagen besteht,
wobei die Gesichtsmaske keine zusätzliche Lage aufweist, und
wobei die Gesichtsmaske eine Bakterielle Filterleistung (BFE) von mindestens 70% aufweist, gemessen gemäß DIN EN 14683:2019-6.

13. Gesichtsmaske gemäß mindestens einem der vorhergehenden Ansprüche, die eine medizinische Gesichtsmaske, ein Mund/Nasenschutz, eine Faltmaske, ein Maskenkorb, eine filtrierende Halbmaske oder ein vergleichbarer Schutz von Mund und Nase ist.

14. Verwendung eines elektrostatisch geladenen Spinnvliesstoffes aus Polypropylenfilamenten, die einen Fasertiter von mindestens 1.3 dtex aufweisen, wobei der elektrostatisch geladene Spinnvliesstoff ein Flächengewicht von 70 bis 400 g/m² aufweist, wobei der Spinnvliesstoff aus 2 oder mehr Lagen besteht, wobei optional mindestens eine zusätzliche Verstärkungslage vorhanden ist, als Filtermedium einer Gesichtsmaske.

15. Verwendung einer Gesichtsmaske gemäß den Ansprüchen 1 bis 13 zum Filtrieren von Luft und/oder zum Entfernen von infektiösen Keimen aus Luft.

## Claims

1. Face mask for separating infectious germs with a filter medium, which consists of a spun nonwoven fabric from polypropylene filaments, which have a fiber titer of at least 1.3 dtex, wherein the spun nonwoven fabric is electrostatically charged, wherein the electrostatically charged spun nonwoven fabric has a basis weight of 70 to 400 g/m², wherein the spun nonwoven fabric consists of two or more layers, wherein optionally a further layer is comprised, which is not a filter medium.

2. Face mask according to claim 1, wherein the spun nonwoven fabric consists of 3 to 6 layers.

3. Face mask according to at least one of the preceding claims, wherein the electrostatically spun nonwoven fabric has a basis weight of 100 to 250 g/m².

4. Face mask according to at least one of the preceding claims, wherein the two or more layers each have a basis weight of 20 to 100 g/m², preferable of 30 to 80 g/m².

5. Face mask according to at least one of the preceding claims, wherein the polypropylene filaments have a fiber titer of 2 to 7 dtex.

6. Face mask, according to at least one of the preceding claims, wherein the layers have different basis weights, and/or
wherein the nonwoven fabric comprises at least 3 layers, which comprise fibers of different diameters, wherein the fiber diameter in an inner layer is lower than in an outer layer.

7. Face mask according to at least one of the preceding claims, wherein the spun nonwoven fabric is electrostatically charged by corona treatment.

8. Face mask according to at least one of the preceding claims, wherein the bacterial filtration efficiency (BFE) is at least 70%, preferably at least 95%, determined according to DIN EN 14683:2019-6.

9. Face mask according to at least one of the preceding claims, which has an air permeability of more than 250 l/m²s, preferably more than 400 l/m²s, determined according to EN ISO 9237:1995 at 100 Pa.

10. Face mask according to at least one of the preceding claims, which an efficiency against NaCl aerosol at 32 l/min volume stream of at least 70%.

11. Face mask according to at least one of the preceding claims, which meets the requirements of medical face masks of DIN EN 14683:2019-6, type I, type II or type IIR, and/or
wherein the optional further layer decreases air permeability of the filter medium by less than 15%.

12. Face mask according to at least one of the preceding claims,
wherein the spun nonwoven fabric consists of 2 to 6 layers,
wherein the face mask does not comprise an additional layer, and
wherein the face mask has a bacterial filtration efficiency (BFE) of at least 70%, determined according to DIN EN 14683:2019-6.

13. Face mask according to at least one of the preceding claims, which is a medical face mask, a mouth/nose protection, a folding mask, a mask basket, a filtering half mask or a comparable protection of mouth and nose.

14. Use of an electrostatically charged spun nonwoven fabric from polypropylene filaments, which have a fiber titer of at least 1.3 dtex, wherein the electrostatically charged spun nonwoven fabric has a basis weight of 70 to 400 g/m², wherein the spun nonwoven fabric consists of two or more layers, wherein optionally a support layer is present, as a filter medium of a face mask.

15. Use of a face mask according to claims 1 to 13 for filtering air and/or for removing infectious germs from air.

## Revendications

1. Masque facial pour séparer des germes infectieux, présentant un support filtrant, qui est constitué par un non-tissé filé-lié en filaments de polypropylène, qui présentent un titre en fibres d'au moins 1,3 dtex, le non-tissé filé-lié étant chargé électrostatiquement, le non-tissé filé-lié chargé électrostatiquement présentant un poids surfacique de 70 à 400 g/m², le non-tissé filé-lié étant constitué par 2 couches ou plus, au moins une couche supplémentaire, qui n'est pas un support filtrant, étant éventuellement présente.

2. Masque facial selon la revendication 1, le non-tissé filé-lié étant constitué par 3 à 6 couches.

3. Masque facial selon au moins l'une quelconque des revendications précédentes, le non-tissé filé-lié chargé électrostatiquement présentant un poids surfacique de 100 à 250 g/m².

4. Masque facial selon au moins l'une quelconque des revendications précédentes, lesdites deux couches ou plus présentant à chaque fois un poids surfacique de 20 à 100 g/m², de préférence de 30 à 80 g/m².

5. Masque facial selon au moins l'une quelconque des revendications précédentes, les filaments de polypropylène présentant un titre en fibres de 2 à 7 dtex.

6. Masque facial selon au moins l'une quelconque des revendications précédentes, les couches présentant des poids surfaciques différents et/ou le non-tissé présentant au moins 3 couches, qui présentent des diamètres de fibre différents, les diamètres de fibre dans une couche interne étant inférieurs à ceux dans une couche externe.

7. Masque facial selon au moins l'une quelconque des revendications précédentes, le non-tissé filé-lié étant chargé électrostatiquement par un traitement au corona.

8. Masque facial selon au moins l'une quelconque des revendications précédentes, qui présente une efficacité de filtration bactérienne (EFB) d'au moins 70%, de préférence d'au moins 95%, mesurée selon la norme DIN EN 14683:2019-6.

9. Masque facial selon au moins l'une quelconque des revendications précédentes, qui présente une perméabilité à l'air supérieure à 250 l/m²s, de préférence supérieure à 400 l/m²s, mesurée selon la norme EN ISO 9237:1995 à 100 Pa.

10. Masque facial selon au moins l'une quelconque des revendications précédentes, qui présente une efficacité par rapport à un aérosol de NaCl à un flux volumique de 32 l/min d'au moins 70%.

11. Masque facial selon au moins l'une quelconque des revendications précédentes, qui répond aux exigences des masques faciaux médicaux de la norme DIN EN 14683:2019-6, type I, type II ou type IIR et/ou les couches supplémentaires éventuelles abaissant la perméabilité à l'air du support filtrant de moins de 15%.

12. Masque facial selon l'une quelconque des revendications précédentes, le non-tissé filé-lié étant constitué par 2 à 6 couches, le masque facial ne présentant pas de couche supplémentaire et le masque facial présentant une efficacité de filtration bactérienne (EFB) d'au moins 70%, mesurée selon la norme DIN EN 14683:2019-6.

13. Masque facial selon au moins l'une quelconque des revendications précédentes, qui est un masque facial médical, une protection bouche/nez, un masque plié, un support de masque, un semi-masque filtrant ou une protection comparable pour la bouche et le nez.

14. Utilisation d'un non-tissé filé-lié chargé électrostatiquement en filaments de polypropylène, qui présentent un titre en fibres d'au moins 1,3 dtex, le non-tissé filé-lié chargé électrostatiquement présentant un poids surfacique de 70 à 400 g/m², le non-tissé filé-lié étant constitué par 2 couches ou plus, au moins une couche de renforcement supplémentaire étant éventuellement présente, comme support filtrant d'un masque facial.

15. Utilisation d'un masque facial selon les revendications 1 à 13 pour filtrer l'air et/ou pour éliminer des germes infectieux de l'air.
